# EUROPÄISCHE PATENTANMELDUNG

(11) **EP 0 811 319 A1**
(43) Veröffentlichungstag der Anmeldung: **10.12.1997**
(21) Anmeldenummer: 97108909.9
(22) Anmeldetag: 03.06.1997
(51) Int. Cl.: A01J 5/017

(54) **Ansetzvorrichtung und Verfahren zum Ansetzen eines Melkbechers**

(30) Priorität: 05.06.1996 DE 19622706
(71) Anmelder: Westfalia Separator AG, 59302 Oelde (DE)
(72) Erfinder: Bücker, Heinrich, 33449 Langenberg (DE)
(74) Vertreter: Kahlhöfer, Hermann, Dipl.-Phys.

(57) **Zusammenfassung**

Um sicherzustellen, daß in einen Melkbecher während der Ortung einer Zitze eines Tieres keine Verunreinigungen gelangen, wird eine Ansetzvorrichtung umfassend eine bewegliche Positioniereinheit zum Positionieren und Ansetzen eines eine obere Öffnung aufweisenden Melkbechers an eine Zitze eines Tieres vorgeschlagen, bei der eine Abdeckeinrichtung vorgesehen ist, die in einer ersten Stellung die Öffnung des Melkbechers abdeckt und in einer zweiten Stellung die Öffnung freigibt.

## Beschreibung

Die vorliegende Erfindung betrifft eine Ansetzvorrichtung und ein Verfahren zum Ansetzen eines Melkbechers an eine Zitze eines Tieres.

Im Zuge der allgemeinen Automatisierung von Vorgängen sind unterschiedliche Vorschläge zur Ausbildung von Ansetzvorrichtungen zum automatischen Ansetzen eines Melkbechers an eine Zitze eines Tieres bekannt geworden. Im wesentlichen kann zwischen zwei Grundprinzipien der Vorrichtungen unterschieden werden. Nach einem der Grundprinzipien nimmt das zu melkende Tier in einem Melkstand eine Zwangsposition ein, so daß die Melkbecher durch eine eindimensional bewegbare Ansetzvorrichtung an die Zitzen des Tieres angesetzt werden. Ein Beispiel für die Verwirklichung dieses Grundprinzips ist durch die EP 0 349 019 A2 bekannt. Die EP 0 349 019 beschreibt eine Ansetzvorrichtung, die unterhalb eines Bodens angeordnet ist. In dem Boden ist eine Öffnung ausgebildet, durch die die Ansetzvorrichtung hindurchgeführt wird, um Melkbecher an Zitzen eines Tieres anzusetzen. Um zu verhindern, daß eine Kuh beim Betreten des Melkstandes nicht in die Bodenöffnung hineintritt, ist eine Abdeckung vorgesehen, die um eine Achse verschwenkbar ist. Die Abdeckung bildet auch ein Teil einer Einrichtung, durch die die Kuh im Melkstand eine Zwangsposition einnimmt.

Obwohl eine Kuh eine Zwangsposition einnimmt, kann nicht sichergestellt werden, daß die Melkbecher ordnungsgemäß angesetzt werden, da die Eutergeometrie und die Lage der Zitzen am Euter bei unterschiedlichen Kühen verschieden ist. Neben diesem Nachteil werden die Kühe bei Melkständen, in denen sie einer Zwangsposition ausgesetzt sind, einer Streßsituation ausgesetzt, die sich negativ auf den Milchertrag der Kuh auswirken kann.

Nach dem zweiten Grundprinzip ist es bekannt, Kühe mit einer gewissen Bewegungsfreiheit in einem Melkstand zu führen und die Melkbecher mittels einer Ansetzvorrichtung an die Zitzen der Kuh anzusetzen, wobei die Ansetzvorrichtung mehrdimensional bewegbar ist. Zum Ansetzen eines jeden Melkbechers wird dieser mittels einer Positioniereinheit positioniert. Ein Beispiel für eine solche Ansetzvorrichtung ist durch die EP 0 213 660 B1 bekannt.

Die nach der EP 0 213 660 B1 bekannte Vorrichtung umfaßt eine bewegliche Positioniereinheit zum Positionieren und Ansetzen eines eine obere Öffnung aufweisenden Bechers an eine Zitze eines Tieres. Die Positionierung eines Bechers erfolgt mittels eines Erfassungsteils, das die augenblickliche Lage der zu ortenden Zitze ermittelt und die ermittelte Lage zur Ansteuerung der Positioniereinheit nutzt. Der Melkbecher wird an eine Zitze erst dann angebracht, wenn dieser sich unmittelbar unterhalb der Zitze befindet. Während der Bewegung der Positioniereinheit in einen Zitzenbereich und während des Ortens einer Zitze zum Ansetzen eines eine obere Öffnung aufweisenden Melkbechers können vom Tier ausgehende oder von sonstigen Vorgängen ausgelöste Verunreinigungen durch die obere Öffnung in den Zitzenbecher gelangen. Diese Verunreinigungsgefahr besteht insbesondere dann, wenn sich die Positionierung des Melkbechers auf Grund schwieriger oder abweichender geometrischer Gegebenheiten oder eines unruhigen Tierverhaltens verzögert. Verunreinigungen, die in den Melkbecher gelangen, führen dazu, daß das Melkergebnis unbrauchbar wird.

Hiervon ausgehend liegt der vorliegenden Erfindung die Aufgabe zugrunde, die bekannte Ansetzvorrichtung so weiter zu bilden, daß ein Eintritt von Verunreinigungen in einen Melkbecher effektiv verhindert wird. Ein weiteres Ziel der Erfindung ist es, ein Verfahren zum Ansetzen eines Melkbechers an eine Zitze eines Tieres anzugeben, durch welches sichergestellt wird, daß Verunreinigungen nicht in den Melkbecher gelangen.

Diese Aufgabe wird erfindungsgemäß durch eine Ansetzvorrichtung mit den Merkmalen des Anspruchs 1 gelöst. Das erfindungsgemäße Verfahren zum Ansetzen eines Melkbechers ist Gegenstand des unabhängigen Anspruchs 10. Vorteilhafte Weiterbildungen und Ausgestaltungen sind Gegenstand der Unteransprüche.

Die erfindungsgemäße Ansetzvorrichtung mit einer beweglichen Positioniereinheit zum Positionieren und Ansetzen eines eine obere Öffnung aufweisenden Melkbechers an eine Zitze eines Tieres, zeichnet sich durch eine Abdeckeinrichtung, die an der beweglichen Positioniereinheit angeordnet und mit dieser beweglich ist. Die Abdeckeinrichtung nimmt während des Positioniervorgangs, eine erste Stellung ein, in der die Öffnung des Melkbechers abgedeckt und eine zweite Stellung ein, in der die Öffnung freigegeben ist. Durch diese Ausgestaltung der Ansetzvorrichtung wird sichergestellt, daß während der Positionierung des Melkbechers unterhalb der Zitze keine Verunreinigungen durch die Öffnung in den Melkbecher gelangen können, da während dieser Phase die Öffnung des Melkbechers abgedeckt ist. Hat der Melkbecher die Position erreicht, in der dieser an die Zitze des Tieres angesetzt wird, so wird die Öffnung des Melkbechers freigegeben. Zur Abdeckung der Öffnung des Melkbechers weist die Abdeckeinrichtung ein Abdeckelement auf, welches so ausgestaltet ist, daß es die Öffnung des Melkbechers vollständig abdeckt. Das Abdeckelement ist vorzugsweise scheibenförmig ausgebildet.

Bevorzugt ist eine Ausbildung eines Abdeckelements, bei der das Abdeckelement kappenartig ausgebildet ist und vorzugsweise die Gestalt einer Kugelschale aufweist. Zur Freigabe der Öffnung ist das Abdeckelement über eine Betätigungseinheit bewegbar. Das Abdeckelement kann hierzu um eine im wesentlichen parallel zur Längsachse des Melkbechers verlaufende Achse verschwenkbar sein.

Bevorzugt ist eine Ausgestaltung der Ansetzvorrichtung, bei der das Abdeckelement um eine im wesentlichen senkrecht zur Längsachse des Melkbechers verlaufende Achse verschwenkbar ist, wobei die Achse unterhalb der Öffnung liegt. Bei dieser Ausgestaltung der Ansetzvorrichtung wird das Abdeckelement in platzsparender Weise nach unten hin weggeschwenkt. Dies hat den Vorteil, daß das Abdeckelement eine benachbarte Zitze des Tieres nicht berührt, wodurch Irritationen des Tieres vermieden werden.

Zur Positionierung der Ansetzvorrichtung weist diese ein oberhalb des Melkbechers und im wesentlichen in Richtung der Längsachse des Melkbechers bewegliches Erfassungsteil, das mit der Abdeckeinrichtung, insbesondere mit dem Abdeckelement, kinematisch angekoppelt ist, auf. Durch diese kinematische Kopplung des Erfassungsteils mit der Abdeckeinrichtung, insbesondere mit dem Abdeckelement, wird eine synchrone Bewegung des Erfassungsteils mit dem Abdeckelement erreicht. Wird das Erfassungsteil zum Melkbecher hinbewegt, so wird gleichzeitig die Öffnung des Melkbechers durch die Abdeckeinrichtung bzw. das Abdeckelement freigegeben.

Das Erfassungsteil ist durch einen Sensorrahmen, der an einem Ende eines Tragarms angeordnet ist, gebildet, wobei der Tragarm an einem Ende der Positioniereinheit angelenkt ist. Das Abdeckelement ist mit dem Tragarm über ein Getriebe, insbesondere eine Gelenkgetriebe, verbunden. Durch das Getriebe, insbesondere das Gelenkgetriebe, wird die Bewegung des Tragarms in eine Bewegung des Abdeckelementes umgewandelt. Dadurch, daß die Bewegung des Tragarms durch die kinematische Kopplung in Form eines Getriebes zu einer Bewegung des Abdeckelementes führt, werden für die Bewegung des Abdeckelementes keine zusätzlichen Betätigungselemente oder - mittel benötigt. Die Bewegung des Tragarms erfolgt mittels einer Kolben-/Zylinder-Einheit, die auf der Positioniereinheit angeordnet ist.

Nach dem Verfahren zum Ansetzen eines eine obere Öffnung aufweisenden Melkbechers an eine Zitze eines Tieres ortet ein Erfassungsteil die Lage einer Zitze und eine Positioniereinheit, die einen eine obere Öffnung weisenden Melkbecher trägt, wird so angesteuert, daß der Melkbecher unter der Zitze positioniert wird. Hat der Melkbecher die zum Ansetzen an die Zitze erforderliche Lage erreicht, so wird die Öffnung des Melkbechers durch eine Abdeckeinrichtung freigegeben. Ist die Öffnung freigegeben, so wird der Melkbecher an die Zitze angesetzt. Vorzugsweise erfolgt die Freigabe der Öffnung des Melkbechers unmittelbar vor dem Ansetzvorgang des Melkbechers an eine Zitze. Zum Freigeben der Öffnung wird ein Abdeckelement verschwenkt, vorzugsweise um eine im wesentlichen senkrecht zur Längsachse des Melkbechers verlaufende Achse, die unterhalb der Öffnung des Melkbechers gelagert ist. Nach einer weiteren vorteilhaften Ausgestaltung des Verfahrens wird vorgeschlagen, daß beim Ansetzen des Melkbechers das Erfassungsteil zur Öffnung des Melkbechers hin bewegt wird und die Abdeckeinrichtung, inbesondere das Abdeckelement, im wesentlichen synchron mit einer Bewegung des Erfassungsteils verschwenkt wird.

Weitere Vorteile und Merkmale der erfindungsgemäßen Ansetzvorrichtung werden anhand des in der Zeichnung dargestellten Ortungsbeispiels erläutert. Es zeigen:
Figur 1 - schematisch eine Ansetzvorrichtung beim Orten einer Zitze und
Figur 2 - die Vorrichtung nach Figur 1 beim Ansetzen des Zitzenbechers.

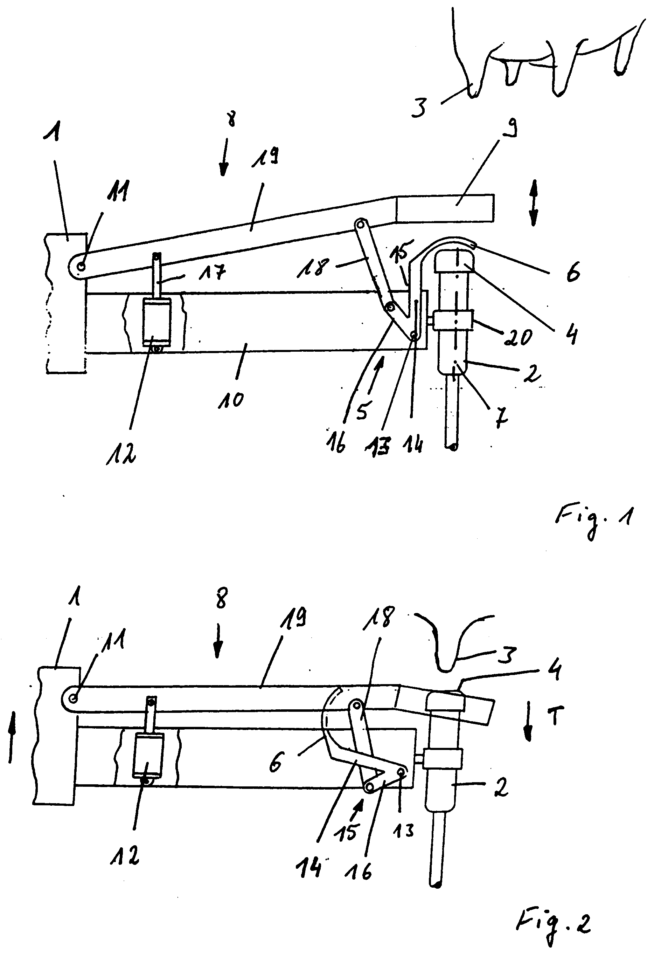

Die Ansetzvorrichtung umfaßt eine bewegliche Positioniereinheit 1. Die Positioniereinheit 1 weist einen Tragarm 10 auf, an dessen freiem Ende ein Melkbecher 2 gehaltert ist. Der Melkbecher 2 weist eine obere Öffnung 4 auf, durch die eine Zitze 3 eines Tieres in den Melkbecher 2 hineinragt. Der Melkbecher 2 ist mittels einer Halteeinrichtung 20 an dem Träger 10 gehaltert, so daß während der Zitzenbecher 2 an der Zitze 3 angesetzt wird, der Melkbecher freigegeben wird und die Positioniereinheit einen weiteren Melkbecher aus einem Melkbechermagazin, das nicht dargestellt ist, entnehmen kann.

Die obere Öffnung 4 des Melkbechers 2 ist durch ein Abdeckelement 6 abgedeckt. Das Abdeckelement 6 ist ein Teil einer Abdeckeinrichtung 5. Das Abdeckelement 6 deckt in einer ersten Stellung die Öffnung des Melkbechers 2 ab und in einer zweiten Stellung gibt das Abdeckelement 6 die Öffnung 4 des Melkbechers 2 frei.

Das Abdeckelement 6 ist an einem freien Ende eines ersten Schenkels 14 eines V-förmigen Hebels 15 angeordnet. Der zweite Schenkel 16 des V-förmigen Hebels 15 ist über eine Stange 18 mit einem Träger 19 verbunden. Der V-förmige Hebel 15 ist um eine im wesentlichen senkrecht zur Längsachse 7 des Melkbechers 2 verlaufende Achse 13 verschwenkbar. Die Achse 13 ist unterhalb der Öffnung 4 des Melkbechers 2 ausgebildet.

Oberhalb des Melkbechers 2 ist ein bewegliches Erfassungsteil 8 vorgesehen. Das Erfassungsteil 8 weist einen an einem Tragarm 19 angeordneten Sensorrahmen 9 auf, der im Bereich des Melkbechers 2 ausgebildet ist. Der Tragarm 19 ist an der Positioniereinheit 1 angelenkt und um die Achse 11 verschwenkbar. Durch ein Verschwenken des Tragarms 19 wird der Sensorrahmen zum Melkbecher hin bzw. von diesem wegbewegt. Zur Betätigung des Tragarms 19 ist dieser mit einer Kolbenstange 17 einer Kolben-/Zylinder-Einheit 12 verbunden, die an dem Träger 10 angeordnet ist.

Zum Ansetzen des Melkbechers 2 an eine Zitze 3 ortet das Erfassungsteil 8 die Lage der Zitze 3, wobei die Positioniereinheit 1, die den eine obere Öffnung aufweisenden Melkbecher trägt, so angesteuert wird, daß der Melkbecher unter der Zitze 3 positioniert wird. Während des Positioniervorgangs deckt das Abdeckelement 6 die obere Öffnung des Melkbechers 2 ab. Ist der Melkbecher unter der Zitze 3 positioniert, bewegt sich die Positioniereinheit 1 in Richtung der Zitze, wobei gleichzeitig das Erfassungsteil 8 durch Betätigung der Kolben-/Zylinder-Einheit 12 relativ zur Positioniereinheit 1 soweit abgesenkt wird, daß die obere Öffnung 4 des Zitzenbechers 2 die Zitze 3 erreichen kann.

Durch Betätigung der Kolben-/Zylinder-Einheit wird der Tragarm 19 um die Achse 11 zum Melkbecher 2 hin verschwenkt. Die Bewegung des Tragarms 19 ist durch den Pfeil T angedeutet. Die Abwärtsbewegung des Tragarms 19 wird über die Stange 18 auf den V-förmigen Hebel 15 übertragen. Hierbei wird der zweite Schenkel 16, der mit der Stange 18 verbunden ist, um die Achse 13 verschwenkt, wodurch gleichzeitig das an dem ersten Hebel 14 angeordnete Abdeckelement 6 die obere Öffnung 4 des Melkbechers 2 freigibt. Ist die Öffnung 4 des Melkbechers 2 durch das Abdeckelement 6 freigegeben, so wird anschließend der Melkbecher 2 an der Zitze 3 angesetzt.

### Bezugszeichenliste

- 1: Positioniereinheit
- 2: Melkbecher
- 3: Zitze
- 4: Öffnung
- 5: Abdeckeinrichtung
- 6: Abdeckelement
- 7: Längsachse
- 8: Erfassungsteil
- 9: Sensorrahmen
- 10: Träger
- 11: Achse
- 12: Kolben/Zylinder-Einheit
- 13: Schwenkachse
- 14: erster Schenkel
- 15: Hebel
- 16: zweiter Schenkel
- 17: Kolbenstange
- 18: Stange
- 19: Tragarm
- 20: Halteeinrichtung

## Patentansprüche

1. Ansetzvorrichtung umfassend eine bewegliche Positioniereinheit (1) zum Positionieren und Ansetzen eines eine obere Öffnung (4) aufweisenden Melkbechers (2) an eine Zitze (3) eines Tieres und eine Abdeckeinrichtung (5), dadurch gekennzeichnet, daß die Abdeckeinrichtung (5) an der Positioniereinheit (1) angeordnet und mit dieser beweglich ist, wobei die Abdeckeinrichtung (5) während eines Positioniervorgangs eine erste Stellung einnimmt, in der die Öffnung (4) des Melkbechers (2) abdeckt ist, und in einer zweiten Stellung zum Ansetzen des Melkbechers (2) die Öffnung (4) freigegeben wird.

2. Ansetzvorrichtung nach Anspruch 1, dadurch gekennzeichnet, daß die Abdeckeinrichtung (5) ein mit einer Betätigungseinheit verbundenes Abdeckelement (6) umfaßt.

3. Ansetzvorrichtung nach Anspruch 2, dadurch gekennzeichnet, daß das Abdeckelement (6) scheibenförmig ausgebildet ist.

4. Ansetzvorrichtung nach Anspruch 2, dadurch gekennzeichnet, daß das Abdeckelement (6) kappenartig ausgebildet ist.

5. Ansetzvorrichtung nach Anspruch 4, dadurch gekennzeichnet, daß das Abdeckelement (6) kugelschalenförmig ausgebildet ist.

6. Ansetzvorrichtung nach einem der Ansprüche 2 bis 5, dadurch gekennzeichnet, daß des Abdeckelement (6) um eine im wesentlichen senkrecht zur Längsachse (7) des Melkbechers (2) verlaufende Achse (13) schwenkbar ist, wobei die Achse (13) unterhalb der Öffnung (4) ausgebildet ist.

7. Ansetzvorrichtung nach einem der Ansprüche 1 bis 6, gekennzeichnet durch ein oberhalb des Melkbechers (2) und im wesentlichen in Richtung der Längsachse (7) hin und her bewegliches Erfassungsteil (8), das mit der Abdeckeinrichtung (5), insbesondere dem Abdeckelement (6), kinematisch gekoppelt ist.

8. Ansetzvorrichtung nach Anspruch 7, dadurch gekennzeichnet, daß das Erfassungsteil (8) durch einen Sensorrahmen (9) und einen an der Positioniereinheit (1) angelenkten Träger (10), an dem der Sensorrahmen (9) gehaltert ist, gebildet ist, und das Abdeckelement (6) mit dem Tragarm (10) über ein Getriebe, insbesondere ein Gelenkgetriebe, verbunden ist.

9. Ansetzvorrichtung nach Anspruch 8, dadurch gekennzeichnet, daß Erfassungsteil (8), insbesondere der Träger (19), mit einer an der Positioniereinheit (1) angeordneten Kolben/Zylinder-Einheit (12) verbunden ist.

10. Verfahren zum Ansetzen eines eine obere Öffnung (4) aufweisenden Melkbechers (2) an eine Zitze (3) eines Tieres, bei dem
ein Erfassungsteil (8) die Lage einer Zitze (3) ortet und eine Positioniereinheit (1), die einen eine obere Öffnung (4) aufweisenden Melkbecher (2) trägt, so angesteuert wird, daß der Melkbecher (2) unter der Zitze (3) positioniert wird,
eine Abdeckeinrichtung (5) die Öffnung (4) des Melkbechers (2) freigegibt, und danach der Melkbecher (2) an die Zitze (3) angesetzt wird.

11. Verfahren nach Anspruch 10, bei dem zum Freigeben bzw. zum Abdecken der Öffnung (4) über diese ein Abdeckelement (6) verschwenkt wird.

12. Verfahren nach Anspruch 11, bei dem des Abdeckelement (6) um eine im wesentlichen senkrecht zur Längsachse (7) des Melkbechers (2) verlaufende Achse (13) verschwenkt wird.

13. Verfahren nach Anspruch 10, 11 oder 12, bei dem beim Ansetzen des Melkbechers (2) das Erfassungsteil (8) zur Öffnung (4) des Melkbechers (2) hin bewegt wird und die Abdeckeinrichtung (5), insbesondere das Abdeckelement (6), im wesentlichen synchron mit der Bewegung des Erfassungsteils (8) verschwenkt wird.
